(19) Europäisches Patentamt
European Patent Office
Office européen des brevets

(11) **EP 4 678 286 A1**

(12) **EUROPEAN PATENT APPLICATION**
published in accordance with Art. 153(4) EPC

(43) Date of publication:
**14.01.2026 Bulletin 2026/03**

(21) Application number: **24767188.6**

(22) Date of filing: **06.03.2024**

(51) International Patent Classification (IPC):
*B01J 23/83* (2006.01)   *B01J 35/60* (2024.01)
*B01J 35/61* (2024.01)   *B01J 35/64* (2024.01)
*B01J 37/08* (2006.01)   *C01B 7/04* (2006.01)
*B01J 35/51* (2024.01)

(52) Cooperative Patent Classification (CPC):
**B01J 23/83; B01J 35/60; B01J 35/61; B01J 35/64;**
**B01J 37/08; C01B 7/04;** B01J 35/51

(86) International application number:
**PCT/JP2024/008604**

(87) International publication number:
**WO 2024/185821 (12.09.2024 Gazette 2024/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.03.2023 JP 2023034968**

(71) Applicant: **Mitsui Chemicals, Inc.**
**Tokyo 104-0028 (JP)**

(72) Inventors:
• **NIISHIRO, Ryo**
**SINGAPORE R&D CENTRE PTE. LTD., 50**
**Science Park**
**Road, 06-08 The Kendall, Singapore Science**
**Park**
**II, 117406 (SG)**
• **SONE, Hideki**
**Sodegaura-shi, Chiba 299-0265 (JP)**
• **WARABIZAKI, Miku**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **HYDROGEN CHLORIDE OXIDATION CATALYST AND METHOD FOR MANUFACTURING HYDROGEN CHLORIDE OXIDATION CATALYST**

(57)   A hydrogen chloride oxidation catalyst is a catalyst for oxidizing hydrogen chloride. The hydrogen chloride oxidation catalyst includes a carrier, and also copper, an alkali metal, and a rare-earth element. The carrier contains alumina as a main component. The copper, the alkali metal, and the rare-earth element are supported on the carrier. In an X-ray diffraction pattern measured with an X-ray diffractometer using CuKα rays, the ratio of a peak at 2θ = 65.2° in the X-ray diffraction pattern with respect to a peak intensity of a (440) plane of alumina crystal is 0.0015 or more and 0.500 or less.

**EP 4 678 286 A1**

**Description**

TECHNICAL FIELD

The present invention relates to a hydrogen chloride oxidation catalyst and a method of producing a hydrogen chloride oxidation catalyst.

BACKGROUND ART

It is known to oxidize hydrogen chloride in the presence of a catalyst to produce chlorine. Such a catalyst can be referred to as a hydrogen chloride oxidation catalyst.

For example, there is a known hydrogen chloride oxidation catalyst in which copper, potassium, and samarium are dispersed in alumina (see, for example, Patent Document 1 below).

Citation List

Patent Document

Patent Document 1: International Publication No. WO2009/041384

SUMMARY OF THE INVENTION

PROBLEM TO BE SOLVED BY THE INVENTION

However, in the hydrogen chloride oxidation catalyst described in Patent Document 1, due to a long period of use (operation of a chlorine production apparatus), the shape of the catalyst may be collapsed and crushed into powder (pulverized). Then, clogging occurs, and this makes it difficult to continue the production of chlorine.

Furthermore, the hydrogen chloride oxidation catalyst is required to have excellent activity. When the activity of the hydrogen chloride oxidation catalyst is excellent, the yield of chlorine in the production of chlorine can be increased.

The present invention provides a hydrogen chloride oxidation catalyst and a method of producing a hydrogen chloride oxidation catalyst, both of which allow for the suppression of pulverization after a long period of use, and excellent catalytic activity.

MEANS FOR SOLVING THE PROBLEM

The present invention [1] includes a hydrogen chloride oxidation catalyst for oxidizing hydrogen chloride, the hydrogen chloride oxidation catalyst including: a carrier containing alumina as a main component; and copper, an alkali metal, and a rare-earth element, all of which are supported on the carrier, wherein in an X-ray diffraction pattern measured with an X-ray diffractometer using CuK$\alpha$ rays, a ratio of a peak at $2\theta = 65.2°$ in the X-ray diffraction pattern with respect to a peak intensity of a (440) plane of alumina crystal is 0.0015 or more and 0.500 or less.

The present invention [2] includes the hydrogen chloride oxidation catalyst described in the above-described [1], wherein the ratio is 0.005 or more and 0.350 or less.

The present invention [3] includes the hydrogen chloride oxidation catalyst described in the above-described [1] or [2], wherein the carrier is alumina.

The present invention [4] includes the hydrogen chloride oxidation catalyst described in any one of the above-described [1] to [3], wherein the hydrogen chloride oxidation catalyst is made of particles, and wherein the hydrogen chloride oxidation catalyst has a specific surface area of 34 $m^2$/g or more and 50 $m^2$/g or less.

The present invention [5] includes the hydrogen chloride oxidation catalyst described in any one of the above-described [1] to [4], wherein the hydrogen chloride oxidation catalyst is made of particles, and wherein the hydrogen chloride oxidation catalyst has an average pore diameter of 10 nm or more and 19 nm or less.

The present invention [6] includes the hydrogen chloride oxidation catalyst described in any one of the above-described [1] to [5], wherein the hydrogen chloride oxidation catalyst is made of particles, and wherein an average value of particle sizes of the particles is 1.5 mm or more and 6 mm or less.

The present invention [7] includes the hydrogen chloride oxidation catalyst described in any one of the above-described [1] to [6], wherein a content of the copper in the hydrogen chloride oxidation catalyst is 1.5% by mass or more and 10.0% by mass or less, wherein a content of the alkali metal in the hydrogen chloride oxidation catalyst is 1.5% by mass or more and 8.0% by mass or less, and wherein a content of the rare-earth element in the hydrogen chloride oxidation catalyst is 5.0% by mass or more and 15.0% by mass or less.

The present invention [8] includes the hydrogen chloride oxidation catalyst described in any one of the above-described [1] to [7], being a fixed bed catalyst.

The present invention [9] includes a method of producing a hydrogen chloride oxidation catalyst described in any one of the above-described [1] to [7], the method comprising: a step (1) of calcining a carrier at 550°C or more and 980°C or less, and a step (2) of supporting copper, an alkali metal, and a rare-earth element on the carrier.

The present invention [10] includes the method described in the above-described [9], wherein in step (1), the carrier is calcined at y°C for x hours, and all of the following formulas (1) to (3) are satisfied.

$$0.25 \le x \le 50 \text{ Formula (1)}$$

$$y \le -5.7x+945 \text{ Formula (2)}$$

$$y \ge -5.7x+620 \text{ Formula (3)}$$

The present invention [11] includes the method described in the above-described [9] or [10], wherein the following formulas (4) and (5) are satisfied.

$$y \le -5.7x+920 \text{ Formula (4)}$$

$$y \ge -5.7x+840 \text{ Formula (5)}$$

EFFECTS OF THE INVENTION

The hydrogen chloride oxidation catalyst of the present invention can suppress pulverization after a long period of use, and has excellent catalytic activity. The production method of the present invention can produce a hydrogen chloride oxidation catalyst that can suppress pulverization after a long period of use, and has excellent catalytic activity.

BRIEF DESCRIPTION OF THE DRAWINGS

FIG. 1 is an image processing view of the hydrogen chloride oxidation catalyst of Example 3 after a 35-day hydrogen chloride oxidation test.
FIG. 2 is an image processing view of the hydrogen chloride oxidation catalyst of Example 10 after a 35-day hydrogen chloride oxidation test.
FIG. 3 is an image processing view of the hydrogen chloride oxidation catalyst of Comparative Example 3 after a 35-day hydrogen chloride oxidation test.
FIG. 4 shows a schematic cross-sectional view of a fixed bed catalyst reactor produced in the evaluation of Examples.

DESCRIPTION OF THE EMBODIMENTS

The hydrogen chloride oxidation catalyst of the present invention and the method of producing a hydrogen chloride oxidation catalyst of the present invention are described in sequence.

In the range of numerical values stepwise given in the present disclosure, the upper or lower limit given in one numerical range may be replaced by the upper or lower limit of the other range of numerical values stepwise given. Furthermore, in the ranges of numerical values given in the present disclosure, the upper limit or lower limit of each range of numerical values may be replaced by a value shown in Examples.

In the present disclosure, when a plurality of substances corresponding to each component are present in a composition, the amount of each component in the composition means the total amount of the substances present in the composition, unless otherwise specified.

In the present disclosure, a combination of two or more preferred embodiments is a more preferred embodiment.

In the present disclosure, the term "step" includes not only an independent step but also any step that achieves its desired purpose even if the step cannot be clearly distinguished from the other steps.

1. Hydrogen Chloride Oxidation Catalyst

Hydrogen chloride oxidation catalyst is a catalyst for oxidizing hydrogen chloride. The hydrogen chloride oxidation catalyst includes a carrier, and also copper, an alkali metal, and a rare-earth element.

1.1 Carrier

The carrier contains alumina as a main component. In other words, the carrier is mainly composed of alumina. Alumina has a crystal structure. In the present embodiment, alumina includes α-alumina and γ-alumina. In the present embodiment, the carrier is allowed to contain a trace amount of impurities inevitably mixed. The content ratio of alumina in the carrier is, for example, 99.0% by mass or more, preferably 99.5% by mass or more. The content ratio of alumina in the carrier can be calculated using the X-ray diffraction pattern described later.

The carrier preferably contains only alumina. In other words, the carrier preferably consists of alumina. That is, the carrier is preferably alumina.

1.2 Copper, Alkali Metal, and Rare-earth Element

Copper, an alkali metal, and a rare-earth element are the active components in the hydrogen chloride oxidation catalyst. The copper, the alkali metal, and the rare-earth element are supported on a carrier.

Examples of the alkali metal include lithium, sodium, potassium, rubidium, cesium, and francium, and preferably potassium is used.

Examples of the rare-earth element include 17 types of rare-earth elements which are scandium and yttrium and (15 kinds of) lanthanoids, and preferably lanthanoid is used, more preferably praseodymium, neodymium, lanthanum, europium, and samarium are used, and more preferably samarium is used.

The content of the copper in the hydrogen chloride oxidation catalyst is, for example, 1.0% by mass or more, preferably 1.5% by mass or more, and more preferably 2.0% by mass or more. The content of copper in the hydrogen chloride oxidation catalyst is, for example, 12.0% by mass or less, preferably 10.0% by mass or less, more preferably 9.0% by mass or less, and more preferably 6.0% by mass or less.

The content of the copper in the hydrogen chloride oxidation catalyst is preferably from 1.0% by mass to 10.0% by mass, more preferably from 1.5% by mass to 10.0% by mass, even more preferably from 2.0% by mass to 9.0% by mass, and particularly preferably from 2.0% by mass to 6.0% by mass.

The content of the alkali metal with respect to the hydrogen chloride oxidation catalyst is, for example, 1.0% by mass or more, preferably 1.2% by mass or more, more preferably 1.5% by mass or more, and is, for example, 12.0% by mass or less, preferably 10.0% by mass or less, more preferably 8.0% by mass or less, and even more preferably 3.5% by mass or less.

The content of the alkali metal with respect to the hydrogen chloride oxidation catalyst is preferably from 1.0% by mass to 12.0% by mass, more preferably from 1.2% by mass to 10.0% by mass, even more preferably from 1.5% by mass to 8.0% by mass, and particularly preferably from 1.5% by mass to 3.5% by mass.

The content of the rare-earth element in the hydrogen chloride oxidation catalyst is, for example, 1.0% by mass or more, preferably 3.0% by mass or more, more preferably 5.0% by mass or more, even more preferably 10% by mass or more, and is, for example, 20.0% by mass or less, preferably 18.0% by mass or less, more preferably 15.0% by mass or less.

The content of the rare-earth element in the hydrogen chloride oxidation catalyst is preferably from 1.0% by mass to 20.0% by mass, more preferably from 3.0% by mass to 18.0% by mass, even more preferably from 5.0% by mass to 18.0% by mass, particularly preferably from 5.0% by mass to 15.0% by mass, and very preferably from 10.0% by mass to 15.0% by mass.

The content of the alkali metal with respect to 100 parts by mass of the copper is, for example, 20 parts by mass or more, preferably 30 parts by mass or more, more preferably 40 parts by mass or more, and is, for example, 200 parts by mass or less, preferably 150 parts by mass or less, more preferably 100 parts by mass or less, and even more preferably 90 parts by mass or less. The content of the alkali metal to 100 parts by mass of the copper is preferably from 20 parts by mass to 200 parts by mass, more preferably from 30 parts by mass to 150 parts by mass, even more preferably from 40 parts by mass to 100 parts by mass, and particularly preferably from 40 parts by mass to 90 parts by mass.

The content of the rare-earth element with respect to 100 parts by mass of the copper is, for example, 20 parts by mass or more, preferably 30 parts by mass or more, more preferably 100 parts by mass or more, and is, for example, 350 parts by mass or less, preferably 300 parts by mass or less. The content of the rare-earth element with respect to 100 parts by mass of the copper is preferably from 20 parts by mass to 350 parts by mass, more preferably from 30 parts by mass to 350 parts by mass, and even more preferably from 100 parts by mass to 300 parts by mass.

When the contents of the copper, alkali metal, and rare-earth element are within the above ranges, complexation of the copper, alkali metal, and rare-earth element easily occurs, and the catalytic activity of the hydrogen chloride oxidation catalyst tends to be high.

The total amount of the copper, the alkali metal, and the rare-earth element with respect to the hydrogen chloride oxidation catalyst is, for example, 5% by mass or more, preferably 10% by mass or more, more preferably 15% by mass or more, and is, for example, 25% by mass or less.

1.3 Ratio of Peak Intensity of Alumina Crystal in X-ray Diffraction Pattern

With respect to the peak intensity of the (440) plane of alumina crystal in the X-ray diffraction pattern of the hydrogen chloride oxidation catalyst measured by an X-ray diffractometer, the ratio of the peak at $2\theta = 65.2°$ in the X-ray diffraction pattern of the hydrogen chloride oxidation catalyst is 0.0015 or more and 0.500 or less. The X-ray diffraction pattern is measured with an X-ray diffractometer using CuK$\alpha$ rays.

The peak of the (440) plane of alumina crystal is a peak derived from $\gamma$-alumina crystal. The peak of the (440) plane of alumina crystal is, for example, identified as a peak at or in the vicinity of $2\theta = 67.5°$ in the X-ray diffraction pattern.

In the present disclosure, a peak at $2\theta = 65.2°$ includes a peak in the vicinity of $2\theta = 65.2°$. In other words, with respect to the peak intensity of the (440) plane of alumina crystal in the X-ray diffraction pattern of the hydrogen chloride oxidation catalyst measured with the X-ray diffractometer, the ratio of the peak at or in the vicinity of $2\theta = 65.2°$ in the X-ray diffraction pattern of the hydrogen chloride oxidation catalyst is 0.0015 or more and 0.500 or less.

It is assumed that the peak at or in the vicinity of $2\theta = 65.2°$ in the X-ray diffraction pattern is derived from the (214) plane of $\alpha$-alumina. This is described in ICDD PDF No. 71-1684.

The peak intensity of the (440) plane and the peak at $2\theta = 65.2°$ are determined as the height from the maximum peak value to the baseline by fitting the graph obtained from the X-ray diffraction analysis with the X-ray diffractometer by a method of least squares and carrying out baseline correction. The measurement of the X-ray diffraction using the X-ray diffractometer described above will be detailed in Examples below.

If the above-described ratio is less than 0.0015, the catalytic activity of the hydrogen chloride oxidation catalyst is insufficient. The factor of the above is presumed to be the following. The content of $\alpha$-alumina in the carrier is excessively low, which decreases the area of the interface of the $\alpha$-alumina and $\gamma$-alumina. At the interface, there are many lattice defects (e.g., oxygen defects), and the copper, alkali metal, and, rare-earth element are effectively supported at the interface. When the area of the interface decreases, the copper, alkali metal, and rare-earth element cannot be effectively stabilized (immobilized) at the interface. Therefore, an efficient support of the copper, alkali metal, and rare-earth element does not occur. As a result, the catalytic activity of the hydrogen chloride oxidation catalyst decreases.

If the ratio is more than 0.500, the catalytic activity of the hydrogen chloride oxidation catalyst is insufficient. The factor of the above is presumed to be the following. It is assumed that the content of $\alpha$-alumina is excessively high due to enlargement of the crystal of $\alpha$-alumina. As a result, the area of the interface of the $\alpha$-alumina and $\gamma$-alumina decreases. Therefore, the catalytic activity of the hydrogen chloride oxidation catalyst decreases.

The ratio is preferably 0.003 or more, more preferably 0.005 or more, even more preferably 0.010 or more, and particularly preferably 0.040 or more. The ratio is preferably 0.400 or less, more preferably 0.350 or less, even more preferably 0.300, particularly preferably 0.250 or less, and the most preferably 0.200 or less.

The ratio is preferably from 0.003 to 0.400, more preferably from 0.005 to 0.350, even more preferably from 0.010 to 0.300, particularly preferably from 0.040 to 0.250, and most preferably from 0.04 to 0.200. Furthermore, the ratio is preferably from 0.005 to 0.200, more preferably from 0.008 to 0.180, and even more preferably from 0.010 to 0.160.

When the ratio is the above-described lower limit or more and the above-described upper limit or less, the catalytic activity of the hydrogen chloride oxidation catalyst can be further improved.

Furthermore, from the viewpoint of further improving the catalytic activity of the hydrogen chloride oxidation catalyst, the peak intensity at $2\theta = 40.8°$ is preferably 1500 [Intensity[counts]] or less, more preferably 1000 [Intensity [counts]] or less, even more preferably 500 [Intensity[counts]] or less, and particularly preferably 100 [Intensity[counts]] or less when the graph obtained from an X-ray diffraction analysis measured based on the method described in Examples is fitted by a method of least squares, and the baseline is corrected.

The method of setting the ratio to the above-described range is not particularly limited, and for example, a method of carrying out step (1) and step (2) in order of the method of producing a hydrogen chloride oxidation catalyst described later is employed.

1.4 Shape of Hydrogen Chloride Oxidation Catalyst

The shape of the hydrogen chloride oxidation catalyst is not particularly limited, and the hydrogen chloride oxidation catalyst may be used in any shape. Examples of the shape include powder, particles, granules, or pellets. From the viewpoint of suppressing the pulverization of the hydrogen chloride oxidation catalyst and improving the catalytic activity, the shape of the hydrogen chloride oxidation catalyst is preferably particles. In other words, preferably, the hydrogen chloride oxidation catalyst is made of particles. The hydrogen chloride oxidation catalyst preferably contains many particles. The shape of the particle is not particularly limited, and examples thereof include a spherical shape, a column shape, and a cylindrical shape (or a noodle shape), and preferably a spherical shape. The shape described above can be confirmed, for example, by visual observation. The spherical shape includes a solid sphere and a spheroidal shape.

1.5 Specific Surface Area of Hydrogen Chloride Oxidation Catalyst

The specific surface area of the hydrogen chloride oxidation catalyst is, for example, 15 $m^2$/g or more, preferably 20 $m^2$/g or more, more preferably 30 $m^2$/g or more, even more preferably 34 $m^2$/g or more, particularly preferably 36 $m^2$/g or more, the most preferably 38 $m^2$/g or more. The specific surface area of the hydrogen chloride oxidation catalyst is, for example, 80 $m^2$/g or less, preferably 60 $m^2$/g or less, more preferably 50 $m^2$/g or less, and even more preferably 37.5 $m^2$/g or less.

The specific surface area of the hydrogen chloride oxidation catalyst is, for example, from 15 $m^2$/g to 80 $m^2$/g, preferably 20 $m^2$/g to 60 $m^2$/g, more preferably 30 $m^2$/g to 60 $m^2$/g, and more preferably 33 $m^2$/g to 50 $m^2$/g. The specific surface area of the hydrogen chloride oxidation catalyst is preferably from 34 $m^2$/g to 37. 5 $m^2$/g, and preferably from 38 $m^2$/g to 48 $m^2$/g.

When the specific surface area of the hydrogen chloride oxidation catalyst is the above-described lower limit or more, the contact area between the hydrogen chloride oxidation catalyst and hydrogen chloride can be increased, and the yield of chlorine can be increased. When the specific surface area of the hydrogen chloride oxidation catalyst is the above-described upper limit or less, pulverization of the hydrogen chloride oxidation catalyst can be suppressed, and furthermore, the hydrogen chloride oxidation catalyst is suitably used as a fixed bed catalyst.

The specific surface area of the hydrogen chloride oxidation catalyst can be measured, for example, by using a BET specific surface area analyzer (BELSORPmax, manufactured by MicrotracBEL Corp.).

1.6 Average Pore Diameter

The average pore diameter of the hydrogen chloride oxidation catalyst is, for example, 1 nm or more, preferably 5 nm or more, more preferably 10 nm or more, and even more preferably 15 nm or more. The average pore diameter of the hydrogen chloride oxidation catalyst is, for example, 100 nm or less, preferably 50 nm or less, more preferably 30 nm or less, particularly preferably 19 nm or less, and the most preferably 15 nm or less. The average pore diameter of the hydrogen chloride oxidation catalyst is, for example, from 1 nm to 100 nm, preferably from 5 nm to 50 nm, more preferably from 10 nm to 30 nm, and even more preferably from 10 nm to 19 nm. The average pore diameter of the hydrogen chloride oxidation catalyst is preferably from 11 nm to 15 nm. The average pore diameter of the hydrogen chloride oxidation catalyst is preferably from 16 nm to 18 nm.

When the average pore diameter is the above-described lower limit or more, the slowing down of the diffusion and migration of the hydrogen chloride and chlorine can be suppressed. When the average pore diameter is the above-described upper limit or less, the reduction in the frequency of reaching the surface of the hydrogen chloride oxidation catalyst can be suppressed while the diffusion of the hydrogen chloride and chlorine is accelerated. Furthermore, an excellent balance between the suppression of the pulverization of the hydrogen chloride oxidation catalyst and the catalytic activity is maintained.

The average pore diameter of the hydrogen chloride oxidation catalyst is determined as 4 V/A determined by a BET theory using a nitrogen-adsorption method.

1.7 Average Value of Particle Sizes of Particles

The average value of the particle sizes of the hydrogen chloride oxidation catalyst is, for example, 1 mm or more, preferably 1.5 mm or more, more preferably 2 mm or more, even more preferably 2.5 mm or more, and particularly preferably 2.8 mm or more. The average value of the particle sizes of the hydrogen chloride oxidation catalyst is, for example, 10 mm or less, preferably 6 mm or less, more preferably 4 mm or less, and even more preferably 3.5 mm or less. The average value of the particle sizes of the hydrogen chloride oxidation catalyst is, for example, from 1 mm to 10 mm, preferably from 1.5 mm to 6 mm, more preferably from 2 mm to 4 mm, even more preferably from 2.5 mm to 3.5 mm, particularly preferably from 2.8 mm to 3.5 mm.

When the average value of the particle sizes of the hydrogen chloride oxidation catalyst is the above-described lower limit or more, pulverization of the hydrogen chloride oxidation catalyst can be suppressed, and furthermore, the hydrogen chloride oxidation catalyst can be suitably used as a fixed bed catalyst.

Furthermore, when the average value of the particle sizes of the hydrogen chloride oxidation catalyst is the above-described upper limit or less, the contact area between the hydrogen chloride oxidation catalyst and the hydrogen chloride can be increased, and the yield of chlorine can be increased.

The average value of the particle sizes of the hydrogen chloride oxidation catalyst is an average value of the particle sizes of 100 particles of the hydrogen chloride oxidation catalyst. Specifically, when the shape of the hydrogen chloride oxidation catalyst is spherical, the diameter of each of 100 particles of the hydrogen chloride oxidation catalyst is measured, and the average value thereof is obtained. Specifically, the diameters of 100 particles of the hydrogen chloride oxidation catalyst are measured by a caliper to obtain an average value thereof. A method for measuring an average value of the particle sizes of the hydrogen chloride oxidation catalyst is described in Examples described later.

## 2. Method of Producing Hydrogen Chloride Oxidation Catalyst

One embodiment of a method of producing a hydrogen chloride oxidation catalyst is described. A method of producing a hydrogen chloride oxidation catalyst includes a step (1) and a step (2). The step (1) and step (2) are carried out in sequence.

### 2.1 Step (1)

In step (1), the carrier is calcined. The physical properties (including the material, the shape, the specific surface area, the average pore diameter, and the average value of the particle sizes) of the carrier described below are the physical properties of the carrier as a raw material of the hydrogen chloride oxidation catalyst, and are not the physical properties of the hydrogen chloride oxidation catalyst. Specifically, the physical properties of the carrier described below are those of the carrier before calcination.

The carrier contains, for example, alumina as a main component, and is preferably alumina. In the present embodiment, for example, the carrier contains $\gamma$-alumina as a main component, and is preferably $\gamma$-alumina. Examples of the shape of the carrier include powder, particles, granules, or pellets, and preferably particles. Examples of the shape of the particle include a spherical shape, a column shape, and a cylindrical shape (or a noodle shape), preferably, a spherical shape. The shape described above can be confirmed, for example, by visual observation. The spherical shape includes a solid sphere and a spheroidal shape.

### 2.1.1 Carrier

The specific surface area of the carrier is, for example, 90 m$^2$/g or more, preferably 100 m$^2$/g or more, more preferably 110 m$^2$/g or more. Furthermore, the specific surface area of the carrier is, for example, 210 m$^2$/g or less, preferably 200 m$^2$/g or less, and more preferably 190 m$^2$/g or less. Furthermore, the specific surface area of the carrier is, for example, from 90 m$^2$/g to 210 m$^2$/g, preferably from 100 m$^2$/g to 200 m$^2$/g, more preferably from 110 m$^2$/g to 190 m$^2$/g. When the specific surface area of the carrier is the above-described lower limit or more, the contact area with hydrogen chloride can be increased, and the yield of chlorine can be increased. When the specific surface area of the carrier is the above-described upper limit or less, the pulverization of the hydrogen chloride oxidation catalyst can be suppressed, and furthermore, the hydrogen chloride oxidation catalyst can be suitably used as a fixed bed catalyst. The method of measuring the specific surface area of the carrier is the same as the method of measuring the specific surface area of the hydrogen chloride oxidation catalyst. Alternatively, a cataloged value can be employed as the specific surface area of the carrier.

The average pore diameter of the carrier is, for example, 1 nm or more, preferably 2 nm or more, and more preferably 4 nm or more. The average pore diameter of the carrier is, for example, 20 nm or less, preferably 18 nm or less, and more preferably 16 nm or less. The average pore diameter of the carrier is, for example, from 1 nm to 20 nm, preferably from 2 nm to 18 nm, more preferably from 4 nm to 16 nm. When the average pore diameter of the carrier is the above-described lower limit or more, the slowing down of the diffusion and migration of the hydrogen chloride and chlorine can be suppressed. When the average pore diameter of the carrier is the above-described upper limit or less, the reduction in the frequency of reaching the surface of the hydrogen chloride oxidation catalyst is suppressed while the diffusion of hydrogen chloride and chlorine is accelerated. Furthermore, an excellent balance between the suppression of the pulverization of the hydrogen chloride oxidation catalyst and the catalytic activity is maintained.

The method of measuring the average pore diameter of the carrier is the same as the method of measuring the average pore diameter of the hydrogen chloride oxidation catalyst. Alternatively, a cataloged value can be employed as the average pore diameter of the carrier.

The average value of the particle sizes of the carrier is, for example, 1 mm or more, preferably 1.2 mm or more, more preferably 1.4 mm or more, and even more preferably 1.8 mm or more. The average value of the particle sizes of the carrier is, for example, 10 mm or less, preferably 6 mm or less, more preferably 4 mm or less, and even more preferably 3.5 mm or less. The average value of the particle sizes of the carrier is, for example, from 1 mm to 10 mm, preferably from 1.2 mm to 6 mm, more preferably from 1.4 mm to 4 mm, even more preferably from 1.6 mm to 3.5 mm, and particularly preferably from 1.8 mm to 3.5 mm. When the average value of the particle sizes of the carrier is the above-described lower limit or more, pulverization of the hydrogen chloride oxidation catalyst can be suppressed, and furthermore, the hydrogen chloride oxidation catalyst can be suitably used as a fixed bed catalyst. When the average value of the particle sizes of the carrier is the above-described upper limit or less, the contact area between the hydrogen chloride and the hydrogen chloride oxidation catalyst can be increased, and the yield of chlorine can be increased.

The bulk density of the carrier is, for example, 0.2 g/ml or more, preferably 0.4 g/ml or more, and more preferably 0.6 g/ml or more. The bulk density of the carrier is, for example, 5.0 g/ml or less, preferably 3.0 g/ml or less, and more preferably 1.0 g/ml or less. The g/ml of the carrier is, for example, from 0.2 g/ml to 5.0 g/ml, preferably from 0.4 g/ml to 3.0 g/ml, more preferably from 0.6 g/ml to 1.0 g/ml.

When the bulk density of the carrier is the above-described lower limit or more, pulverization of the hydrogen chloride oxidation catalyst can be suppressed, and furthermore, the hydrogen chloride oxidation catalyst can be suitably used as a fixed bed catalyst. When the bulk density of the carrier is the above-described upper limit or less, the contact area between the hydrogen chloride and the hydrogen chloride oxidation catalyst can be increased, and the yield of chlorine can be increased. A method of measuring the bulk density of the carrier is described in Examples described later. Alternatively, a cataloged value can be employed as the bulk density of the carrier.

The method of measuring the average value of the particle sizes of the carrier is the same as the method of measuring the average value of the particle sizes of the hydrogen chloride oxidation catalyst. Alternatively, a cataloged value can be employed as the average value of the particle sizes of the carrier.

2.1.2 Calcination

In step (1), the carrier is calcined at 550°C or more and 980°C or less. The calcination temperature is preferably 580°C or more, more preferably 620°C or more, even more preferably 660°C or more, particularly preferably 680°C or more, and most preferably 820°C or more. The calcination temperature is preferably 945°C or less, more preferably 920°C or less, even more preferably 880°C or less, particularly preferably 830°C or less. The calcination temperature is preferably from 580°C to 930°C, more preferably from 620°C to 880°C, even more preferably from 660°C to 830°C. The calcination temperature is preferably from 680°C to 820°C, and preferably from 830°C to 920°C. It is also possible to stepwise increase the calcination temperature. When the calcination temperature is the above-described lower limit or more and the above-described upper limit or less, the catalytic activity of the hydrogen chloride oxidation catalyst can be improved, and the yield of chlorine is improved.

The calcination time is, for example, 0.25 hours or more, preferably 0.5 hours or more, and more preferably 0.75 hours or more. The calcination time is, for example, 50 hours or less, preferably 30 hours or less, more preferably 15 hours or less, and even more preferably 12 hours or less. The calcination time is, for example, from 0.25 hours to 50 hours or less, preferably from 0.25 hours to 30 hours, more preferably from 0.25 hours to 15 hours or less, even more preferably from 0.5 hours to 12 hours, and particularly preferably from 0.75 hours to 12 hours. When the calcination temperature is the above-described lower limit or more and the above-described upper limit or less, the catalytic activity of the hydrogen chloride oxidation catalyst can be improved, and the yield of chlorine is improved.

2.1.3 Relationship between Calcination Time and Calcination Temperature

In the step (1), the carrier is calcined at y°C for x hours, and satisfies all of the following formulas (1) to (3).

$$0.25 \leq x \leq 50 \text{ Formula (1)}$$

$$y \leq -5.7x+945 \text{ Formula (2)}$$

$$y \geq -5.7x+620 \text{ Formula (3)}$$

When all of the formulas (1) to (3) are satisfied, the catalytic activity of the hydrogen chloride oxidation catalyst can be improved, and the yield of chlorine is improved.

Preferably, the following formulas (4) and (5) are satisfied.

$$y \leq -5.7x+920 \text{ Formula (4)}$$

$$y \geq -5.7x+840 \text{ Formula (5)}$$

When both of the formulas (4) and (5) are satisfied, the catalytic activity of the hydrogen chloride oxidation catalyst can be further improved, and the yield of chlorine is further improved.

The calcination of the carrier is carried out, for example, under air atmosphere or under inert gas atmosphere. The calcination of the carrier is carried out under atmospheric pressure or under reduced pressure. The calcination of the carrier is preferably carried out under air atmosphere and atmospheric pressure from the viewpoint of production cost.

By the above-described calcination of the carrier, the carrier consisting of $\gamma$-alumina becomes a carrier containing $\alpha$-alumina and $\gamma$-alumina. The $\alpha$-alumina is identified by a peak at or in the vicinity of $2\theta = 65.2°$ in the X-ray diffraction pattern of the carrier.

In other words, by the calcination of the carrier, the ratio of the peak of the carrier at $2\theta = 65.2°$ with respect to the peak intensity of the (440) plane of the carrier in the X-ray diffraction pattern is in the desired range described above.

2.2 Step (2)

The step (2) is carried out subsequently to step (1). In step (2), the copper, alkali metal, and rare-earth element are supported on the carrier. Specifically, the copper, alkali metal, rare-earth element are supported on the carrier calcined under the above-described conditions. As a supporting method, for example, an active component-containing aqueous solution containing a compound of the above-described active components and the carrier are blended and mixed, and then dried. The compound contains chlorides and/or oxides of the copper, alkali metal, and rare-earth element. Before heating, the atmosphere of the mixture can be depressurized, if necessary. The drying temperature is, for example, 25°C or more, preferably 50°C or more, for example, 250°C or less, and preferably the above-described mixture is heated at 150°C or less. The drying time is not limited.

Thereafter, the mixture may be cooled. The cooling temperature may be, for example, 50°C or less, may be 40°C or less, may be 0°C or more, may be 10°C or more. The cooling temperature includes room temperatures. The room temperatures are 20°C to 25°C. The cooling time is not limited. The mixture may be cooled under reduced pressure.

In this manner, a hydrogen chloride oxidation catalyst is produced.

3. Uses of Hydrogen Chloride Oxidation Catalyst

The hydrogen chloride oxidation catalyst is used, for example, in either of a batch type and a flow-through type. The hydrogen chloride oxidation catalyst is preferably used in a flow-through type. Examples of the flow-through type include a fixed bed, a fluidized bed, and a moving bed. As the flow-through type, a fixed bed is preferably used. In other words, the hydrogen chloride oxidation catalyst is preferably a fixed bed catalyst.

The hydrogen chloride oxidation catalyst as a fixed bed catalyst is filled, for example, into a reactor of a fixed bed. The hydrogen chloride oxidation catalyst forms a hydrogen chloride oxidation catalyst layer in the reactor.

To oxidize hydrogen chloride by using the hydrogen chloride oxidation catalyst, for example, hydrogen chloride and oxygen are brought into contact with each other in the above-described reactor. The oxidation of hydrogen chloride produces chlorine. Along with the production of chlorine, water is obtained as a by-product.

Examples

With reference to Examples and Comparative Examples, the present invention is further detailed below, but the present invention is not limited thereto.

The physical properties of the carrier before calcination are described below.

<Carrier>

$\gamma$-Alumina (1), spherical particles, specific surface 122m$^2$/g, average pore diameter (4V/A) 10.4 nm, average value of particle sizes 3.2 mm, and bulk density 0.71 g/ml (each of the above-described specific surface area, average pore diameter, average value of particle sizes, and bulk density is calculated by the measurement methods described below. The same applies hereafter)

$\gamma$-alumina (2), spherical particles, specific surface area 173m$^2$/g, average pore diameter (4V/A) 6.9nm, average value of particle sizes 1.9 mm, and bulk density 0.85 g/ml

Silica, spherical particles, trade names: CARiACT Q15, manufactured by Fuji Silysia Chemical Ltd., specific surface area 556 m$^2$/g, average pore diameter (4V/A) 12.3 nm, average value of particle sizes 3.1 mm, and bulk density 0.42g/ml

<Production of Hydrogen Chloride Oxidation Catalyst>

Example 1

First, a carrier consisting of γ-alumina (1) was calcined at 600°C under air atmosphere in an electric furnace (Yamato Scientific co., ltd.: FO510) for 10 hours. In this manner, step (1) was carried out.

Separately, water, samarium oxide (III) (manufactured by FUJIFILM Wako Pure Chemical Corporation, Ltd., 99.9%), copper chloride (II) dihydrate (manufactured by FUJIFILM Wako Pure Chemical Corporation, reagent special grade), potassium chloride (manufactured by FUJIFILM Wako Pure Chemical Corporation, reagent special grade) and hydrochloric acid (manufactured by FUJIFILM Wako Pure Chemical Corporation, Wako Primary, 35.0 to 37.0%) were mixed according to the formulation shown in Table 1 to prepare an active component-containing aqueous solution. Water that was tap water distilled with a distilled water production apparatus (ADVANTEC TOYO KAISHA, LTD.: RFD 240NA) until the electric conductivity reached 5 μS/cm or less was used.

After the active component-containing aqueous solution and the calcined carrier were mixed together, the depressurization, increasing temperature, drying, and cooling were carried out under the conditions shown in Table 2, thereby the copper, potassium, and samarium were supported on the calcined carrier. In this manner, step (2) was carried out.

In this manner, a hydrogen chloride oxidation catalyst was produced. The composition ratio (% by mass) of the copper, potassium, and samarium in the hydrogen chloride oxidation catalyst is shown in Tables 3 and 4.

Examples 2 to 13 and Comparative Examples 1 and 2

In the same manner as in Example 1, step (1) and step (2) were carried out in sequence to produce a hydrogen chloride oxidation catalyst. However, the contents of the copper, potassium, and samarium in the active component-containing aqueous solution, the type of the carrier, and/or the calcination temperature and time of the carrier in Step (1) were changed as shown in Tables 1, 3, and 4

Comparative Example 3

A hydrogen chloride oxidation catalyst was produced in the same manner as in Example 1. However, step (1) was not carried out, and the carrier was changed to silica in place of γ-alumina (1).

Comparative Example 4

A hydrogen chloride oxidation catalyst was produced in the same manner as in Example 1. However, the carrier was changed to silica in place of γ-alumina (1).

Comparative Example 5

Production of a hydrogen chloride oxidation catalyst was attempted in the same manner as in Example 1. However, in the calcination of Step (1), the carrier was calcined at 1100°C for 5 hours to convert the γ-alumina (1) into a α-alumina. Therefore, copper, potassium, and samarium were not sufficiently supported on the carrier. In other words, in Comparative Example 5, a hydrogen chloride oxidation catalyst could not be produced.

<Evaluations>

For the hydrogen chloride oxidation catalyst of each of Examples 1 to 13 and Comparative Examples 1 to 5, the following items were evaluated. The results are shown in Tables 3 and 4.

<Ratio of Peak at 2θ=65.2° with respect to Peak Intensity of (440) Plane of Alumina Crystal>

The hydrogen chloride oxidation catalyst was ground in an agate mortar to prepare powder. Subsequently, the powder was put evenly into the recessed portion of a glass sample sheet (depth 0.2mm, item: D1T25N, manufactured by Rigaku Holdings Corporation). Using another glass sheet, the power was molded by compression so that the surface of the powder was flat. In this manner, a glass sample sheet was produced.

The glass sample sheet was attached to a wide-angle X-ray diffractometer (device: MiniFlex600-C manufactured by Rigaku Holdings Corporation, measurement software: Smart Lab Studio II). Specifically, the glass sample sheet was attached to the standard sample stage in the sample chamber of the wide-angle X diffractometer. The wide-angle X diffractometer and the conditions are described below.

Subsequently, first, a wide-angle X-ray diffraction profile measurement was carried out based on the following measurement conditions. Diffraction profiles were obtained from the wide-angle X-ray diffraction profile measurement. Here, the graph obtained from the X-ray diffraction analysis was fitted by a method of least squares, and the baseline was corrected. The maximum value of the peak appearing around $2\theta = 40.8°$ was 3 [Intensity[counts]].

From the baseline-corrected graph, the maximum value of the peak was read when the peak appeared around $2\theta = 65.2°$. On the other hand, when a clear peak was not confirmed around $2\theta = 65.2°$, the intensity at $2\theta = 65.2°$ was read.

From the baseline-corrected graph, the maximum value of the peak appearing around $2\theta = 67.5°$ was determined as the peak intensity of $\gamma$-alumina, i.e., the peak intensity of the (440) plane of the alumina crystal.

Then, the ratio of the peak at $2\theta = 65.2°$ in the X-ray diffraction pattern with respect to the peak intensity of the (440) plane of the alumina crystal was calculated. The results are shown in Tables 3 and 4.

<Optical conditions>

Slit System: Variable + Fixed Slit System
Incident solar: Solar slit 2.5°
HIS: 10mm
SS: 13.0 mm (Open)
Light-receptive solar: Solar slit 2.5°
Monochromatic: K$\beta$ filter ($\times$ 1.5)
DS: 1.25°
RS: 13.0mm (Open)

<Measurement conditions>

Scan axis: $2\theta/\theta$
Scan mode: 1D (Scan)
Energy mode: Standard
Start: 20°
Termination: 80°
Step: 0.01°
Speed: 5°/min
Tube voltage: 40 kV
Tube current 15 mA

<Average Values of Particle Sizes of Carrier before Calcination and Hydrogen Chloride Oxidation Catalyst>

100 particles of the hydrogen chloride oxidation catalyst were arbitrarily selected, and the particle size of each of the particles were measured by a digital caliper (Mitutoyo Corporation: CD-15CX), and then the average value thereof was obtained, and determine as the average value of the particle sizes of the hydrogen chloride oxidation catalyst. The average value of the particle sizes of the carrier before calcination was also obtained in the same manner as the hydrogen chloride oxidation catalyst.

<Specific Surface Areas of Carrier before Calcination and Hydrogen Chloride Oxidation Catalyst>

The specific surface area of each of the carrier before calcination and the hydrogen chloride oxidation catalyst was measured using a BET specific surface area analyzer (BELSORPmax, manufactured by MicrotracBEL Corp.).

In the measurement of the specific surface area of the hydrogen chloride oxidation catalyst, the hydrogen chloride oxidation catalyst was heated at 200°C under air atmosphere in an electric furnace (Yamato Scientific Co., Ltd.: FO510) for 3 hours prior to performing a pre-treatment described later. The heated hydrogen chloride oxidation catalyst was filled into the measurement container of the analyzer. The analyzer and measurement conditions are as follows.

Analyzer: BERSORP-max (manufactured by MicrotracBEL Corp.)
Measurement conditions: Pre-treatment: 30°C, 1kPa, 4 hours measurement temperature: -196°C

The specific surface area of the carrier before calcination was also measured in the same manner as the specific surface area of the hydrogen chloride oxidation catalyst. However, the temperature of the pre-treatment was changed from 30°C to 180°C.

<Average Pore Diameters of Carrier before Calcination and Hydrogen Chloride Oxidation Catalyst>

The average pore diameter (4V/A) of the hydrogen chloride oxidation catalyst was obtained according to a BET theory using a nitrogen-adsorption method. The hydrogen chloride oxidation catalyst was heated in advance at 200 °C under air atmosphere in the electric furnace (Yamato Scientific Co., Ltd.: FO510) for 3 hours, and thereafter filled into the measurement container of the analyzer. The analyzer and measurement conditions are as follows.

Analyzer: BERSORP-max (manufactured by MicrotracBEL Corp.)
Measurement conditions: Pre-treatment: 30°C, 1kPa, 4 hours measurement temperature: -196°C

The average pore diameter of the carrier before calcination was also measured in the same manner as the average pore diameter of the hydrogen chloride oxidation catalyst.

<Bulk Density of Hydrogen Chloride Oxidation Catalyst>

Into a 200-ml measuring cylinder, a hydrogen chloride oxidation catalyst was filled so that the volume was 40ml, and then the mass of the filled hydrogen chloride oxidation catalyst: M (g) was measured. Then, the bulk density of the carrier was calculated according to the following equation.

$$\text{Bulk Density (g/ml)} = M \text{ (g)}/40 \text{ (ml)}$$

The average pore diameter of the carrier before calcination was also obtained in the same manner as the hydrogen chloride oxidation catalyst.

<Yield of Chlorine>

The hydrogen chloride oxidation catalyst of each of Examples 1 to 13 and Comparative Examples 1 to 4 was brought into contact with hydrogen chloride and oxygen while being heated to produce chlorine.

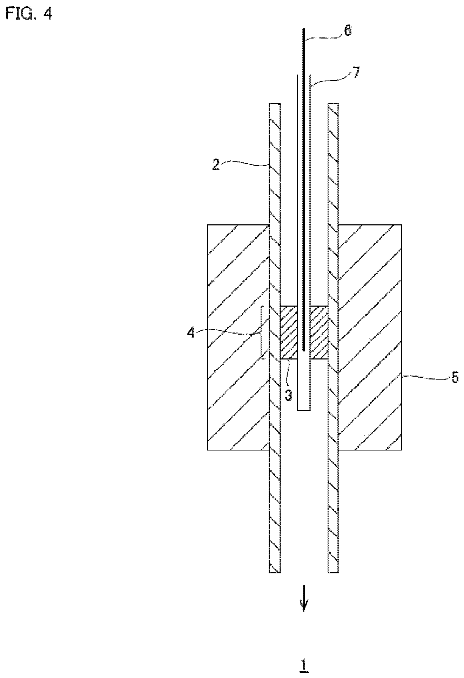

In detail, as shown in FIG. 4, a 1.6-cm diameter straight tube (an example of a reactor) 2 was filled with 6mL (apparent volume) of a hydrogen chloride oxidation catalyst 3 to create a catalyst region 4. The length of the catalytic region 4 (the length in a direction in which the straight tube 2 extends) was 3cm. In this manner, a fixed bed catalyst reactor 1 including a straight tube 2, a hydrogen chloride oxidation catalyst 3, a thermocouple 6, and a sheath tube 7 was produced. The thermocouple 6 was capable of measuring the temperature of the hydrogen chloride oxidation catalyst 3. The thermocouple 6 was movable in the vertical direction with respect to the straight pipe 2. The sheath tube 7 protected the thermocouple 6. The sheath tube 7 had a cylindrical shape with a bottom. The outer diameter of the sheath tube 7 was 0.4mm. Furthermore, in the fixed bed catalyst reactor 1, the catalyst region 4 was disposed at the central of the straight tube 2 in the longitudinal direction.

Further, a heating furnace 5 accommodating the catalyst region 4 inside was provided in the fixed bed catalyst reactor 1. The heating furnace 5 was an electric furnace capable of adjusting the temperature. The heating furnace 5 was provided with a program that raised the temperature of the inside of the heating furnace 5 so that the hydrogen chloride oxidation catalyst 3 had the same temperature as the predetermined temperature set at the start of operation if the temperature of the hydrogen chloride oxidation catalyst 3 dropped from the predetermined temperature during operation.

The hydrogen chloride and oxygen were allowed to flow through the fixed bed catalyst reactor 1 from the upper end to the lower end of the fixed bed catalyst reactor 1 at a hydrogen chloride flow rate of 45 ml/min and at an oxygen flow rate of 22.5 ml/min, respectively. The temperature of the heating furnace 5 was set so that the hydrogen chloride oxidation catalyst 3 had the reaction temperature shown in Table 4. In Comparative Examples 3 and 4, the hydrogen chloride flow rate and the oxygen flow rate were set to 90 ml/min and 90 ml/min, respectively.

Then, the yield of chlorine after 50 hours elapsed was obtained. Specifically, when the period of use reached 50 hours, potassium iodide (KANTO CHEMICAL CO., INC., for oxidant analysis) was dissolved in water, and the produced gas was absorbed into 300ml of the 0.3 mol/l potassium iodide solution for 10 minutes. Thereafter, with respect to the potassium iodide solution, the amount of chlorine produced was measured by using a 0.1mol/l sodium thiosulfate solution (KANTO CHEMICAL CO., INC.) to determine the yield of chlorine.

<Longevity of Catalyst>

In Examples 3, 10 to 12, and Comparative Examples 1, 3, and 4, the hydrogen chloride oxidation catalyst was taken out after 35 days since the reaction had started under the above conditions, and was visually observed to confirm the degree of pulverization of the hydrogen chloride oxidation catalyst (including the presence or absence of pulverization).

The catalyst longevity was evaluated by the degree of pulverization. The criteria were as follows.

∘: No pulverization was confirmed.
△: Pulverization was slightly confirmed.
✕: Pulverization was confirmed.

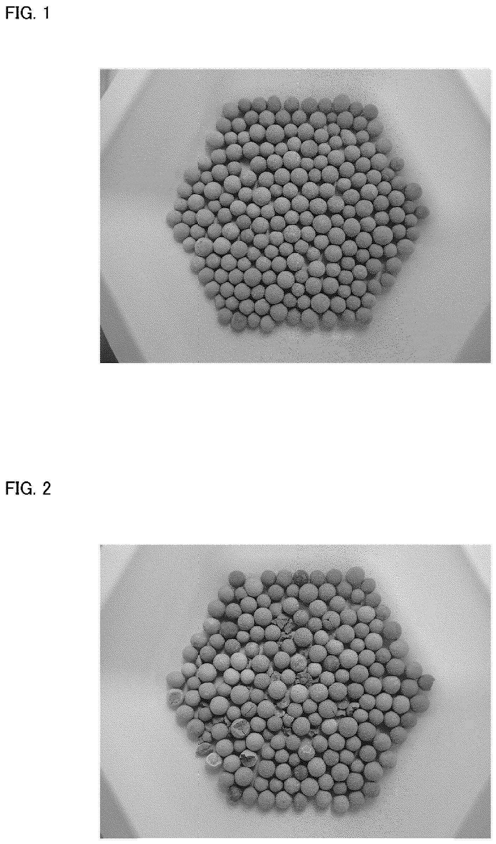

FIG. 1 shows a computer-processed image of the hydrogen chloride oxidation catalyst of Example 3 after 35 days.

FIG. 2 shows a computer-processed image of the hydrogen chloride oxidation catalyst of Example 10 after 35 days.

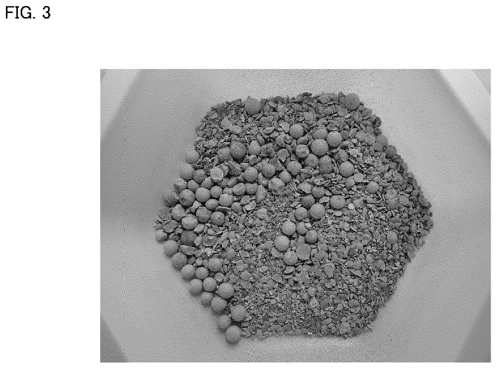

FIG. 3 shows a computer-processed image of the hydrogen chloride oxidation catalyst of Comparative Example 3 after 35 days.

Table 1

Table 1

| | | | Presence or absence of calcination (Step (1)) | Formulation of hydrogen chloride oxidation catalyst [% by mass] | | | |
|---|---|---|---|---|---|---|---|
| | | | | Examples 1-11, Comp. Ex. 1, 2, 5 | Examples 12-13 | Comp. Ex. 3 | Comp. Ex. 4 |
| Active component-containing aqueous solution | Water | | | 36.0 | 36.0 | 49.7 | 49.7 |
| | Hydrochloric acid | | | 9.5 | 11.8 | 5.5 | 5.5 |
| | Copper chloride (II) dihydrate | | | 7.8 | 5.1 | 7.4 | 7.4 |
| | Potassium chloride | | | 3.3 | 2.2 | 3.1 | 3.1 |
| | Samarium oxide (III) | | | 6.6 | 6.6 | 3.1 | 3.1 |
| Carrier | γ-alumina (1) | Presence | | 36.8 | - | - | - |
| | γ-alumina (2) | Presence | | - | 38.3 | - | - |
| | Silica | Presence | | - | - | - | 31.2 |
| | Silica | Absence | | - | - | 31.2 | - |

Table 2

Table 2

| Depressurization | Room temperature, 0.023MPa |
|---|---|
| Temperature increase | 90°C, 0.041 MPa, 1 hour |
| Drying | 90°C, 0.023MPa, 2 hours |
| Cooling | Room temperature, 0.023MPa, 0.5 hours |

Table 3

Table 3

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Carrier before calcination | | Material | | γ-alumina (1) | γ-alumina (1) | γ-alumina (1) | γ-alumina (1) | γ-alumina (1) | γ-alumina (1) | γ-alumina (1) | γ-alumina (1) | γ-alumina (1) |
| | Physical properties | Specific surface area | $m^2/g$ | 122 | 122 | 122 | 122 | 122 | 122 | 122 | 122 | 122 |
| | | Average pore diameter | nm | 10.4 | 10.4 | 10.4 | 10.4 | 10.4 | 10.4 | 10.4 | 10.4 | 10.4 |
| | | Average value of particle diameters | mm | 3.2 | 3.2 | 3.2 | 3.2 | 3.2 | 3.2 | 3.2 | 3.2 | 3.2 |
| | | Bulk density | $g/m\ell$ | 0.71 | 0.71 | 0.71 | 0.71 | 0.71 | 0.71 | 0.71 | 0.71 | 0.71 |
| Conditions for step (1) | Calcination | Temperature | °C | 600 | 700 | 700 | 800 | 800 | 850 | 850 | 850 | 900 |
| | | Time | h | 10 | 1 | 10 | 5 | 10 | 1 | 5 | 10 | 1 |
| | Formula (1) | Whether $0.25 \leq x \leq 50$ is satisfied | | Satisfied | Satisfied | Satisfied | Satisfied | Satisfied | Satisfied | Satisfied | Satisfied | Satisfied |
| | Formula (2) | $-5.7x+945$ | | 888 | 939 | 888 | 917 | 888 | 939 | 917 | 888 | 939 |
| | | Whether $y \leq -5.7x+945$ is satisfied | | Satisfied | Satisfied | Satisfied | Satisfied | Satisfied | Satisfied | Satisfied | Satisfied | Satisfied |
| | Formula (3) | $-5.7x+620$ | | 563 | 614 | 563 | 592 | 563 | 614 | 592 | 563 | 614 |
| | | Whether $y \geq -5.7x+620$ is satisfied | | Satisfied | Satisfied | Satisfied | Satisfied | Satisfied | Satisfied | Satisfied | Satisfied | Satisfied |
| | Formula (4) | $-5.7x+920$ | | 863 | 914 | 863 | 892 | 863 | 914 | 892 | 863 | 914 |
| | | Whether $y \leq -5.7x+920$ is satisfied | | Satisfied | Satisfied | Satisfied | Satisfied | Satisfied | Satisfied | Satisfied | Satisfied | Satisfied |
| | Formula (5) | $-5.7x+840$ | | 783 | 834 | 783 | 812 | 783 | 834 | 812 | 783 | 834 |
| | | Whether $y \geq -5.7x+840$ is satisfied | | Unsatisfied | Unsatisfied | Unsatisfied | Unsatisfied | Satisfied | Satisfied | Satisfied | Satisfied | Satisfied |
| Hydrogen chloride oxidation catalyst | Composition ratio of active components | Copper | % by mass | 5.5 | 5.5 | 5.5 | 5.5 | 5.5 | 5.5 | 5.5 | 5.5 | 5.5 |
| | | Potassium | % by mass | 3.3 | 3.3 | 3.3 | 3.3 | 3.3 | 3.3 | 3.3 | 3.3 | 3.3 |
| | | Samarium | % by mass | 11 | 11 | 11 | 11 | 11 | 11 | 11 | 11 | 11 |
| | Ratio[1] | | - | 0.0232 | 0.0849 | 0.0267 | 0.1994 | 0.0222 | 0.0620 | 0.0471 | 0.1515 | 0.0115 |
| | Specific surface area | | $m^2/g$ | 44.7 | 42.4 | 39.5 | 40.3 | 40.1 | 38.2 | 40.0 | 34.5 | 37.5 |
| | Average pore diameter | | nm | 13.6 | 11.4 | 11.5 | 16.4 | 15.3 | 17.7 | 18.6 | 16.6 | 18.0 |
| | Average value of particle diameters | | mm | 3.31 | 3.1 | 3.4 | 3.29 | 3.3 | 3.1 | 3.3 | 3.41 | 3.2 |
| Evaluations | Yield of chlorine after 50-hour use | | % | 70.8 | 70.1 | 70.4 | 71.3 | 74.3 | 76.8 | 74.2 | 75.9 | 77.2 |
| | Longevity of catalyst (pulverization after 35 days) | | | - | - | O | - | - | - | - | - | - |

$$\text{[1] Ratio} = \left( \frac{\text{peak at } 2\theta = 65.2°}{\text{Peak intensity of (440) plane of alumina crystal}} \right)$$

Table 4

| | Property | Unit | Example 10 | Example 11 | Example 12 | Example 13 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Carrier before calcination | Material | | γ-alumina (1) | γ-alumina (1) | γ-alumina (2) | γ-alumina (2) | γ-alumina (1) | γ-alumina (1) | Silica | Silica | γ-alumina (1) |
| Physical properties | Specific surface area | $m^2$/g | 122 | 122 | 173 | 173 | 122 | 122 | 556 | 556 | 122 |
| | Average pore diameter | nm | 10.4 | 10.4 | 6.9 | 6.9 | 10.4 | 10.4 | 12.3 | 12.3 | 10.4 |
| | Average value of particle diameters | mm | 3.2 | 3.2 | 1.9 | 1.9 | 3.2 | 3.2 | 3.1 | 3.1 | 3.2 |
| | Bulk density | g/mℓ | 0.71 | 0.71 | 0.85 | 0.85 | 0.71 | 0.71 | 0.42 | 0.42 | 0.71 |
| Conditions for step (1) — Calcination | Temperature | °C | 900 | 950 | 700 | 800 | 500 | 1000 | - | 850 | 1100 |
| | Time | h | 5 | 1 | 10 | 5 | 10 | 5 | | 10 | 5 |
| | Formula (1) Whether $0.25 \leq x \leq 50$ is satisfied | | Satisfied | Satisfied | Satisfied | Satisfied | Satisfied | Satisfied | | Satisfied | Satisfied |
| | Formula (2) $-5.7x+945$ | | 917 | 939 | 888 | 917 | 888 | 917 | | 888 | 917 |
| | Whether $y \leq -5.7x+945$ is satisfied | | Satisfied | Unsatisfied | Satisfied | Satisfied | Satisfied | Unsatisfied | | Satisfied | Unsatisfied |
| | Formula (3) $-5.7x+620$ | | 592 | 614 | 563 | 592 | 563 | 592 | | 563 | 592 |
| | Whether $y \geqq -5.7x+620$ is satisfied | | Satisfied | Satisfied | Satisfied | Satisfied | Unsatisfied | Satisfied | | Satisfied | Satisfied |
| | Formula (4) $-5.7x+920$ | | 892 | 914 | 863 | 892 | 863 | 892 | | 863 | 892 |
| | Whether $y \leq -5.7x+920$ is satisfied | | Unsatisfied | Unsatisfied | Satisfied | Satisfied | Satisfied | Unsatisfied | | Satisfied | Unsatisfied |
| | Formula (5) $-5.7x+840$ | | 812 | 834 | 783 | 812 | 783 | 812 | | 783 | 812 |
| | Whether $y \geqq -5.7x+840$ is satisfied | | Satisfied | Satisfied | Unsatisfied | Unsatisfied | Unsatisfied | Satisfied | | Satisfied | Satisfied |
| Hydrogen chloride oxidation catalyst | Composition ratio of active components — Copper | % by mass | 5.5 | 5.5 | 4 | 4 | 5.5 | 5.5 | 7 | 7 | Active components are not sufficiently supported*2 |
| | Potassium | % by mass | 3.3 | 3.3 | 2.4 | 2.4 | 3.3 | 3.3 | 4.2 | 4.2 | |
| | Samarium | % by mass | 11 | 11 | 12 | 12 | 11 | 11 | 7 | 7 | |
| | Ratio*1 | - | 0.0427 | 0.0484 | 0.185 | 0.0498 | 0.00127 | 0.526 | - | - | |
| | Specific surface area | $m^2$/g | 36.8 | 33.5 | 47.3 | 38.2 | 51.6 | 15.8 | 85.2 | 71.8 | |
| | Average pore diameter | nm | 19.9 | 17.6 | 12.1 | 14.7 | 12.8 | 14.8 | 22.8 | 23.5 | |
| | Average value of particle diameters | mm | 3.0 | 3.42 | 1.82 | 1.89 | 3.1 | 3.47 | 2.9 | 3.09 | |
| Evaluations | Yield of chlorine after 50-hour use | % | 71.6 | 69.1 | 79.4 | 79.1 | 66.0 | 55.0 | 66.2 | 56.4 | |
| | Longevity of catalyst (pulverization after 35 days) | | △ | △ | ○ | - | ○ | - | × | × | - |

*1 Ratio = (peak at $2\theta = 65.2°$) / (Peak intensity of (440) plane of alumina crystal)

*2 : Because the carrier is converted into α-alumina

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

Industrial Applicability

The hydrogen chloride oxidation catalyst and the method of producing the hydrogen chloride oxidation catalyst of the present invention can be used for producing chlorine.

**Claims**

1. A hydrogen chloride oxidation catalyst for oxidizing hydrogen chloride, the hydrogen chloride oxidation catalyst comprising:

     a carrier containing alumina as a main component; and
     copper, an alkali metal, and a rare-earth element, all of which are supported on the carrier,

     wherein in an X-ray diffraction pattern measured with an X-ray diffractometer using CuK$\alpha$ rays, a ratio of a peak at $2\theta = 65.2°$ in the X-ray diffraction pattern with respect to a peak intensity of a (440) plane of alumina crystal is 0.0015 or more and 0.500 or less.

2. The hydrogen chloride oxidation catalyst according to claim 1,
   wherein the ratio is 0.005 or more and 0.350 or less.

3. The hydrogen chloride oxidation catalyst according to claim 1,
   wherein the carrier is alumina.

4. The hydrogen chloride oxidation catalyst according to claim 1,

     wherein the hydrogen chloride oxidation catalyst is made of particles, and
     wherein the hydrogen chloride oxidation catalyst has a specific surface area of 34 $m^2$/g or more and 50 $m^2$/g or less.

5. The hydrogen chloride oxidation catalyst according to claim 1,

     wherein the hydrogen chloride oxidation catalyst is made of particles, and
     wherein the hydrogen chloride oxidation catalyst has an average pore diameter of 10 nm or more and 19 nm or less.

6. The hydrogen chloride oxidation catalyst according to claim 1,

     wherein the hydrogen chloride oxidation catalyst is made of particles, and
     wherein an average value of particle sizes of the particles is 1.5 mm or more and 6 mm or less.

7. The hydrogen chloride oxidation catalyst according to claim 1,

     wherein a content of the copper in the hydrogen chloride oxidation catalyst is 1.5% by mass or more and 10.0% by mass or less,
     wherein a content of the alkali metal in the hydrogen chloride oxidation catalyst is 1.5% by mass or more and 8.0% by mass or less, and
     wherein a content of the rare-earth element in the hydrogen chloride oxidation catalyst is 5.0% by mass or more and 15.0% by mass or less.

8. The hydrogen chloride oxidation catalyst according to claim 1, being a fixed bed catalyst.

9. A method of producing a hydrogen chloride oxidation catalyst according to any one of claims 1 to 8, the method comprising:

a step (1) of calcining a carrier at 550°C or more and 980°C or less, and
a step (2) of supporting copper, an alkali metal, and a rare-earth element on the carrier.

10. The method according to claim 9, wherein in step (1), the carrier is calcined at y°C for x hours, and all of the following formulas (1) to (3) are satisfied.

$$0.25 \leq x \leq 50 \text{ Formula (1)}$$

$$y \leq -5.7x+945 \text{ Formula (2)}$$

$$y \geq -5.7x+620 \text{ Formula (3)}$$

11. The method according to claim 10, wherein the following formulas (4) and (5) are satisfied.

$$y \leq -5.7x+920 \text{ Formula (4)}$$

$$y \geq -5.7x+840 \text{ Formula (5)}$$

FIG. 1

FIG. 2

FIG. 3

FIG. 4

## INTERNATIONAL SEARCH REPORT

| | International application No. |
|---|---|
| | **PCT/JP2024/008604** |

**A. CLASSIFICATION OF SUBJECT MATTER**

*B01J 23/83*(2006.01)i; *B01J 35/60*(2024.01)i; *B01J 35/61*(2024.01)i; *B01J 35/64*(2024.01)i; *B01J 37/08*(2006.01)i; *C01B 7/04*(2006.01)i; *B01J 35/51*(2024.01)n
FI:  B01J23/83 M; B01J35/60 G; B01J35/61; B01J35/64; B01J37/08; C01B7/04 A; B01J35/51

According to International Patent Classification (IPC) or to both national classification and IPC

**B. FIELDS SEARCHED**

Minimum documentation searched (classification system followed by classification symbols)

B01J21/00-38/74; C01B7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 112044445 A (SHANGHAI CHLOR-ALKALI CHEMICAL CO., LTD.) 08 December 2020 (2020-12-08)<br>claims, paragraphs [0006]-[0037], examples 1-3 | 1-11 |
| A | TIAN, Xin et al., Sustainable utilization of chlorine via converting HCl to Cl2 over a robust copper catalyst, Molecular Catalysis, 24 May 2020, vol. 492, 110977, DOI: 10.1016/j.mcat.2020.110977<br>abstract, page 2, left column, second and third paragraphs, page 4, left column, first paragraph, fig. 4(a) | 1-11 |
| A | JP 2009-505817 A (BASF SE) 12 February 2009 (2009-02-12)<br>entire text | 1-11 |
| A | FENG, Kanka et al., An efficient Cu-K-La/γ-Al2O3 catalyst for catalytic oxidation of hydrogen chloride to chlorine, Applied Catalysis B: Environmental, 02 October 2014, vol. 164, pages 483-487, DOI:10.1016/j.apcatb.2014.09.063<br>entire text, all drawings | 1-11 |

☑ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **12 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/008604** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 103145099 A (YANTAI WANHUA POLYURETHANES CO., LTD.) 12 June 2013 (2013-06-12) <br> entire text, all drawings | 1-11 |
| A | JP 2022-030305 A (MIZUSAWA IND. CHEM., LTD.) 18 February 2022 (2022-02-18) <br> entire text, all drawings | 1-11 |

Form PCT/ISA/210 (second sheet) (July 2022)

## INTERNATIONAL SEARCH REPORT
### Information on patent family members

International application No.

**PCT/JP2024/008604**

| Patent document cited in search report | | | Publication date (day/month/year) | Patent family member(s) | | | Publication date (day/month/year) |
|---|---|---|---|---|---|---|---|
| CN | 112044445 | A | 08 December 2020 | (Family: none) | | | |
| JP | 2009-505817 | A | 12 February 2009 | US | 2008/0247941 | A1 | |
| | | | | entire text | | | |
| | | | | WO | 2007/023162 | A1 | |
| | | | | EP | 1919611 | A1 | |
| | | | | DE | 102005040286 | A | |
| | | | | CN | 101272852 | A | |
| | | | | KR | 10-2008-0034213 | A | |
| CN | 103145099 | A | 12 June 2013 | (Family: none) | | | |
| JP | 2022-030305 | A | 18 February 2022 | US | 2023/0173460 | A1 | |
| | | | | entire text, all drawings | | | |
| | | | | WO | 2022/030515 | A1 | |
| | | | | TW | 202218748 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009041384 A